# EUROPÄISCHE PATENTSCHRIFT

(11) **EP 1 344 920 B1**
(45) Veröffentlichungstag und Bekanntmachung des Hinweises auf die Patenterteilung: **05.03.2008**
(21) Anmeldenummer: 02027052.6
(22) Anmeldetag: 03.12.2002
(51) Int. Cl.: F02D 41/22, F02D 41/14, F02M 65/00

(54) **Verfahren zur Steuerung und/oder Diagnose eines Kraftstoffzumesssystems, Computerprogramm, Steuergerät und Brennkraftmaschine**
Method, computer program and apparatus for controlling and/or diagnosing a fuel metering device, and internal combustion engine,
Méthode, programme informatique et organe de commande et/ou de diagnostic d'un dispositif de dosage de carburant, et moteur à combustion interne

(30) Priorität: 14.03.2002 DE 10211282
(43) Veröffentlichungstag der Anmeldung: 17.09.2003
(73) Patentinhaber: ROBERT BOSCH GMBH, 70442 Stuttgart (DE)
(72) Erfinder: Kimmich, Reiner, 74321 Bietigheim-Bissingen (DE); Ries-Müller, Klaus, 74906 Bad Rappenau (DE)

(56) Entgegenhaltungen:
- EP-A- 1 277 941
- DE-A1- 4 002 208
- DE-A1- 19 945 813
- DE-A1- 19 946 911
- DE-C1- 19 742 925
- US-A- 5 181 499
- PATENT ABSTRACTS OF JAPAN Bd. 1999, Nr. 03, 31. März 1999 (1999-03-31) & JP 10 339196 A (NISSAN MOTOR CO LTD), 22. Dezember 1998 (1998-12-22)

## Beschreibung

Die Erfindung betrifft ein Verfahren zur Steuerung und/oder Diagnose eines Kraftstoffzumeßsystems einer Brennkraftmaschine, wobei die Brennkraftmaschine eine Gemischadaptionsfunktion aufweist und wobei Kraftstoff von wenigstens einem Ventil direkt in wenigstens einen Brennraum eingespritzt wird. Die Erfindung betrifft weiterhin ein entsprechendes Computerprogramm für eine Brennkraftmaschine eines Kraftfahrzeugs, ein Steuergerät zur Steuerung und/oder Diagnose eines Kraftstoffzumeßsystems einer Brennkraftmaschine sowie eine Brennkraftmaschine mit wenigstens einem Steuergerät zur Steuerung und/oder Diagnose eines Kraftstoffzumeßsystems der Brennkraftmaschine.

### Stand der Technik

Die DE 197 42 925 C1 offenbart ein Verfahren zum Überwachen eines Einspritzsystems einer Brennkraftmaschine. Die Überwachung erfolgt hierbei mittels zweier im Abgasstrang angeordneter Abgassonden, wobei eine erste Abgassonde die Kohlenwasserstoff-, die Stickoxid- oder die Kohlenmonoxid-Konzentration im Abgas darstellt. Bei der zweiten Abgassonde handelt es sich um eine Lambdasonde, die den Lambdawert des Abgases bestimmt. Entsprechend der DE 197 42 925 C1 wird davon ausgegangen, dass bei einer Fehlfunktion des Einspritzsystems die Meßsignale der Abgassonden 1 und 2 von ihrem Sollwert abweichen und dabei einen zulässigen Wertebereich verlassen. Die zulässigen Wertebereiche für die einzelnen Abgassonden sind in Abhängigkeit von der Motorlast bzw. der Einspritzmenge und der Motordrehzahl in einem Datenspeicher abgelegt. Eine Ausführungsform sieht vor, den zulässigen Wertebereich in Abhängigkeit vom Betriebszustand der Brennkraftmaschine, insbesondere für einen transienten und einen konstanten Motorbetrieb, im Speicher abzulegen. Der Vergleich der von den Abgassonden gelieferten Signale mit den zulässigen Wertebereichen erfolgt in einem Zustandsautomat, der unmittelbar nach dem Start der Brennkraftmaschine beginnt, die von den Abgassonden gelieferten Signale mit den entsprechenden zulässigen Wertebereichen zu vergleichen. Wird vom Zustandsautomaten eine Fehlfunktion des Einspritzsystems dadurch festgestellt, dass ein Signal einer Abgassonde den zulässigen Wertebereich verläßt, so erfolgt ein Eintrag in einem Fehlerspeicher. Der Zustandsautomat kann zwischen einer Fehlfunktion im Drucksystem des Einspritzsystems und einem Drehzahlfehler unterscheiden. Zusätzlich zum Fehlereintrag wird von dem Zustandsautomaten im Fehlerfall ein Signal an einen Ausgang gelegt, wobei dieser Ausgang vom Motorsteuergerät überwacht wird. Wird vom Motorsteuergerät aufgrund des vom Zustandsautomaten gelieferten Signals ein Fehler im Einspritzsystem erkannt, so wird entsprechend der DE 197 42 925 C1 das Einspritzsystem abgeschaltet.

Die DE 199 46 911 A1 betrifft ein Verfahren und eine Vorrichtung zur Überwachung einer Kraftstoffzumeßsystems einer Brennkraftmaschine. Ein Fehler im Kraftstoffzumeßsystem wird entsprechend der DE 199 46 911 A1 erkannt, wenn eine Mengenausgleichsregelung oder eine Laufruheregelung von einem erwarteten Wert abweicht. Dies kann beispielsweise auf irreguläre Verbrennung oder Aussetzer hindeuten. Solche Fehler liegen insbesondere dann vor, wenn ein Injektor eines Common-Rail-Systems klemmt. Dies bedeutet, der Injektor öffnet und/oder schließt nicht entsprechend dem Ansteuerungssignal. Gibt der Injektor die Einspritzung nicht frei, wie vom Ansteuersignal gewünscht, so liegt ein Aussetzer vor. Unterbindet der Injektor die Einspritzung nicht, wie vom Ansteuersignal gewünscht, so liegt eine irreguläre Verbrennung vor. Dieser Fehler wird auch als innere Leckage bezeichnet. Als Größen, die die Stellgröße einer Mengenausgleichsregelung oder einer Laufruheregelung charakterisieren, können beispielsweise die Korrekturmengen, die die Mengenausgleichsregelung bzw. die Laufruheregelung bereitstellt oder entsprechende Integralanteile der den Zylindern zugeordneten Regler verwendet werden.

Die US 5,181,499 offenbart eine Diagnosevorrichtung für ein Kraftstoffeinspritzsystem, mit dem Fehler im Kraftstoffeinspritzsystem diagnostiziert werden können. Bei dem Kraftstoffsystem handelt es sich um eine Saugrohreinspritzung mit Lambdaregelung. Über die Beobachtung der Lambdaregelwerte wird auf einen Fehler im Kraftstoffversorgungssystem geschlossen und im Anschluß eine Warnlampe aktiviert, die darauf hinweist, dass die Abgase möglicherweise außerhalb der Toleranz liegen. Als Fehler können entsprechend der US 5,181,499 offen oder geschlossen klemmende Kraftstoffeinspritzventile detektiert werden.

Die japanische Offenlegung 10-339196 (Anmeldenummer 09-166704) offenbart eine direkt einspritzende Brennkraftmaschine. Die Brennkraftmaschine wird mit einer Lambdaregelung betrieben, bei der unter bestimmten Servicebedingungen überprüft werden kann, ob die reale Pulsbreite zur Ansteuerung des Kraftstoffsystems mit einer vorbestimmten Pulsbreite übereinstimmt. Übersteigt die Pulsbreite den vorbestimmten Wertebereich, so wird die Einspritzung in Richtung auf eine Einspritzung im Ansaugtakt zeitlich verschoben. Gleichzeitig wird der Einspritzdruck erhöht, wodurch die Eindringtiefe des Treibstoffs erhöht wird. Durch diese Maßnahme soll ein möglicherweise mit Kohlenstoff verschmutztes Einspritzventil, insbesondere im Bereich der Einspritznadel, gereinigt werden.

Aus der DE 199 45 813 A1 ist ein Verfahren bekannt, das durch Auswerten von Verbrennungsaussetzer eine Verschmutzung eines Einspritzventils einer Brennkraftmaschine erkennt und Maßnahmen zur Reinigung einleitet.

Ferner ist aus der EP-A-1277 941 ein Verfahren zur Steuerung und Diagnose eines Kraftstoffzumesssystems bekannt, beim dem Kraftstoff von wenigstens einem Einspritzventil direkt in einen Brennraum einer Brennkraftmaschine eingespritzt wird. Eine Verschmutzung der Einspritzventil wird durch Auswerten der Lambdawerte erkannt.

### Aufgabe, Lösung und Vorteile der Erfindung

Es ist die Aufgabe der Erfindung, ein Verfahren zur Steuerung und/oder Diagnose eines Kraftstoffzumesssystems einer Brennkraftmaschine derart weiterzubilden, dass eine einfache und zuverlässige Möglichkeit zur Fehlerbestimmung besteht, die auch in normalen Betriebssituationen und nicht nur in speziellen Prüfmodi durchgeführt werden kann.

Die Aufgabe wird gelöst durch ein Verfahren zur Steuerung und/oder Diagnose eines Kraftstoffzumesssystems einer Brennkraftmaschine, wobei die Brennkraftmaschine eine Gemischadaptionsfunktion aufweist, wobei Kraftstoff von wenigstens einem Ventil direkt in wenigstens einen Brennraum eingespritzt wird, und wobei eine Verschmutzung des Ventils durch eine Auswertung von Ausgangswerten der Gemischadaptionsfunktion erkannt wird. Das erfindungsgemäße Verfahren weist den großen Vorteil auf, dass es zu jedem Zeitpunkt des Betriebs der Brennkraftmaschine durchgeführt werden kann. Dadurch, dass die Ausgangswerte der Gemischadaptionsfunktion ausgewertet werden, kann auf Werte zurückgegriffen werden, die in einem Motorsteuergerät mit einer Gemischadaptionsfunktion ohnehin vorliegen. Dies vereinfacht das Verfahren gegenüber dem Stand der Technik erheblich und führt zudem zu einer sehr schnellen Auswertemöglichkeit. Da nicht wie im Stand der Technik in einen speziellen Prüfmodus übergegangen werden muß, können auftretende Fehler im Kraftstoffzumeßsystem während des Betriebs der Brennkraftmaschine sicher, schnell und zuverlässig erkannt werden.

Vorteilhaft wird die Verschmutzung anhand von steigenden Ausgangswerten der Gemischadaptionsfunktion erkannt. Hierbei deuten steigende Ausgangswerte der Gemischadaptionsfunktion auf eine Durchflußmengenverringerung an einem Kraftstoffeinspritzventil hin. Eine bevorzugte Weiterbildung des erfindungsgemäßen Verfahrens sieht vor, dass die Auswertung der Ausgangswerte der Gemischadaptionsfunktion jeweils nach einer variablen Zeitdauer erfolgt. Durch diese Maßnahme wird das Motorsteuergerät entlastet. Andererseits kann die Zeitdauer derart kurz gewählt werden, dass die Detektion einer Verschmutzung praktisch unmittelbar erfolgt. Erfindungsgemäß wird das Verfahren dadurch weitergebildet, dass die variable Zeitdauer von Betriebspunkten abhängig ist, die während des Betriebs einer Brennkraftmaschine durchlaufen werden. Dies ist mit Blick auf die unterschiedliche Verschmutzungswahrscheinlichkeit in verschiedenen Betriebspunkten der Brennkraftmaschine vorteilhaft. Insbesondere bei hoher Last und hoher Drehzahl ist mit einer erhöhten Verschmutzung der Brennkraftmaschine zu rechnen, so dass ein diesen Betriebsbereichen eine verkürzte Zeitdauer zwischen zwei Auswertungen vorteilhaft ist, während beispielsweise in Bereichen mit geringerer Last die variable Zeitdauer zwischen zwei Auswertungszeitpunkten größer gewählt werden kann.

Eine erfindungsgemäße Weiterbildung sieht vor, dass den jeweiligen Betriebspunkten eine Wichtung zugeordnet ist, wobei die Wichtung in Abhängigkeit von einer erwarteten Verschmutzungswahrscheinlichkeit erfolgt (ein Betriebspunkt kann hierbei beispielsweise durch die Größen Last und Drehzahl definiert sein). Diese Wichtungen können vorteilhafterweise dazu genutzt werden, um die Veränderungen der Gemischadaptionswerte besser beurteilen zu können. Insbesondere kann im Steuergerät mittels der Wichtungsfunktion ein Zähler realisiert werden, der dazu genutzt wird, die variable Zeitdauer zu ermitteln. Dies kann dadurch geschehen, dass die variable Zeitdauer einem bestimmten, vorgebbaren Zählerstand entspricht. Ist dieser Zählerstand erreicht, wird eine aktuelle Auswertung der Gemischadaptionswerte gestartet.

Eine andere vorteilhafte Ausgestaltung des erfindungsgemäßen Verfahrens sieht vor, dass eine Auswertung nur dann erfolgt, wenn sich die Brennkraftmaschine zum Auswertungszeitpunkt in einem vorgegebenen Betriebsbereich befindet. Diese Weiterbildung macht das erfindungsgemäße Verfahren robuster, da die Auswertung vorteilhaft zu Zeitpunkten erfolgt, in denen sich die Brennkraftmaschine beispielsweise in Betriebsbereichen mit extrem hoher Verschmutzungswahrscheinlichkeit befindet.

Eine besonders bevorzugte Weiterbildung des erfindungsgemäßen Verfahrens sieht vor, dass zur Auswertung gespeicherter Ausgangswerte der Gemischadaptionsfunktion mit aktuellen Werten verglichen werden. Diese Weiterbildung weist den großen Vorteil auf, dass das Verfahren beständig gegen Alterungseffekte der Brennkraftmaschine ist. Durch die Speicherung von Ausgangswerten der Gemischadaptionsfunktion zu vorgebbaren Zeitpunkten während der Lebensdauer der Brennkraftmaschine kann auf die Alterung bzw. Veränderung der Brennkraftmaschinendaten während der Lebensdauer reagiert werden. Es werden also nicht vor der ersten Inbetriebnahme der Brennkraftmaschine fixe Schwellenwerte für die Ausgangswerte der Gemischadaptionsfunktion im Motorsteuergerät abgelegt, wodurch das erfindungsgemäße Verfahren gegenüber dem Stand der Technik deutlich flexibler ist.

Eine andere bevorzugte Weiterbildung des erfindungsgemäßen Verfahrens sieht vor, dass bei Feststellung einer Verschmutzung gezielt, gegebenenfalls auch wiederholt, Maßnahmen zur Reinigung eingeleitet werden.

Von besonderer Bedeutung ist die Realisierung des erfindungsgemäßen Verfahrens in Form eines Computerprogramms, das für eine Brennkraftmaschine insbesondere eines Kraftfahrzeugs vorgesehen ist. Das Computerprogramm weist eine Abfolge von Befehlen auf, die dazu geeignet sind, das erfindungsgemäße Verfahren durchzuführen, wenn sie auf einem Computer ausgeführt werden.

Weiterhin kann die Abfolge von Befehlen auf einem computerlesbaren Datenträger gespeichert sein, beispielsweise auf einer Diskette, einer Compact Disc (CD-ROM), einer DVD, einem sogenannten.Flash-Memory oder dergleichen.

Das Computerprogramm kann gegebenenfalls zusammen mit anderen Computerprogrammen als Softwareprodukt, beispielsweise an einen Hersteller von Steuergeräten für Brennkraftmaschinen vertrieben werden. Die Übermittlung des Softwareprodukts kann dabei durch die Übersendung einer Diskette oder einer CD erfolgen, deren Inhalt der Steuergerätehersteller dann auf das Steuergerät überträgt. Ebenfalls ist es möglich, dass ein Flash-Memory an den Steuergerätehersteller versandt wird, das dieser direkt in das Steuergerät einsetzt. Ebenfalls ist es möglich, dass das Softwareprodukt über ein elektronisches Kommunikationsnetzwerk, insbesondere das Internet, an den Steuergerätehersteller übermittelt wird. In diesem Fall stellt das Softwareprodukt als solches - also unabhängig von einem elektronischen Speichermedium - das Vertriebsprodukt dar. Der Steuergerätehersteller lädt in diesem Fall das Softwareprodukt z.B. aus dem Internet herunter, um es danach beispielsweise auf einem Flash-Memory abzuspeichern und in das Steuergerät einzusetzen.

Das Computerprogramm kann auch als separates Softwareprodukt vertrieben werden, das ein Hersteller von Steuergeräten zusammen mit weiteren Softwareprodukten anderer (Dritter) Hersteller in das Steuergerät überträgt. In diesem Fall stellt das erfindungsgemäße Softwareprodukt ein zu anderen Modulen fremder Hersteller kompatibles Softwaremodul dar.

In allen diesen Fällen wird die Erfindung durch das Computerprogramm realisiert, so dass dieses Computerprogramm in gleicher Weise die Erfindung darstellt die das Verfahren, zu dessen Ausführung das Computerprogramm geeignet ist. Dies gilt dabei unabhängig davon, ob das Computerprogramm auf einem Speichermedium abgespeichert ist, oder ob es als solches - also unabhängig von einem Speichermediumvorhanden ist.

Die Aufgabe wird weiterhin gelöst durch ein Steuergerät zur Steuerung und/oder Diagnose eines Kraftstoffzumeßsystems einer Brennkraftmaschine, wobei das Steuergerät eine Gemischadaptionsfunktion aufweist, wobei Kraftstoff von wenigstens einem Ventil direkt in wenigstens einen Brennraum eingespritzt wird und wobei Mittel vorgesehen sind, um eine Verschmutzung des Ventils durch eine Auswertung von Ausgangswerten der Gemischadaptionsfunktion zu erkennen.

Die Aufgabe wird weiterhin gelöst durch eine Brennkraftmaschine mit wenigstens einem Steuergerät zur Steuerung und/oder Diagnose eines Kraftstoffzumeßsystems der Brennkraftmaschine, wobei die Brennkraftmaschine eine , Gemischadaptionsfunktion aufweist, wobei Kraftstoff von wenigstens einem Ventil direkt in wenigstens einen Brennraum eingespritzt wird, und wobei Mittel vorgesehen sind, um eine Verschmutzung des Ventils durch eine Auswertung von Ausgangswerten der Gemischadaptionsfunktion zu erkennen.

Weitere Merkmale, Anwendungsmöglichkeiten und Vorteile der Erfindung ergeben sich aus der nachfolgenden Beschreibung von Ausführungsbeispielen der Erfindung, die in den Figuren gezeigt sind.

### Ausführungsbeispiele der Erfindung

- Figur 1: zeigt ein erfindungsgemäßes Steuergerät sowie eine erfindungsgemäße Brennkraftmaschine,
- Figur 2: zeigt ein erfindungsgemäßes Verfahren zur Steuerung und/oder Diagnose eines Kraftstoffzumeßsystems einer Brennkraftmaschine, bzw. ein entsprechendes Computerprogramm für eine Brennkraftmaschine, und
- Figur 3: zeigt ein Detail des erfindungsgemäßen Verfahrens: Eine Ausführungsvariante eines Ablagerungszählers.

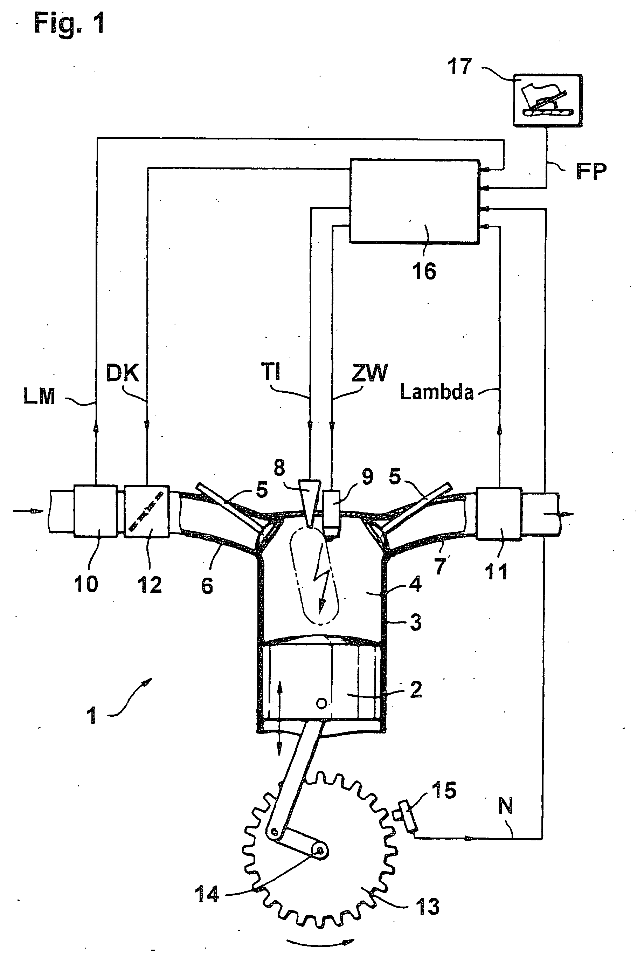

Figur 1 zeigt ein erfindungsgemäßes Steuergerät 16 sowie eine erfindungsgemäße Brennkraftmaschine 1. Bei der Brennkraftmaschine 1 ist ein Kolben 2 in einem Zylinder 3 hin- und herbewegbar. Der Zylinder 3 ist mit einem Brennraum 4 versehen, an den über Ventile 5 ein Ansaugrohr 6 und ein Abgasrohr 7 angeschlossen sind. Des Weiteren sind mit dem Brennraum 4 ein mit dem Signal TI ansteuerbares Einspritzventil 8 und eine mit einem Signal ZW ansteuerbare Zündkerze 9 verbunden. Die Signale TI und ZW werden hierbei von einem Steuergerät 16 an das Einspritzventil 8 bzw. die Zündkerze 9 übertragen.

Das Ansaugrohr 6 ist mit einem Luftmassensensor 10 und das Abgasrohr 7 mit einem Lambdasensor 11 versehen. Der Luftmassensensor 10 misst die Luftmasse der dem Ansaugrohr 6 zugeführten Frischluft und erzeugt in Abhängigkeit davon ein Signal LM. Der Lambdasensor 11 misst den Sauerstoffgehalt des Abgases in dem Abgasrohr 7 und erzeugt in Abhängigkeit davon ein Signal Lambda. Die Signale des Luftmassensensors 10 und des Lambda-Sensors 11 werden dem Steuergerät 16 zugeführt.

In dem Ansaugrohr 6 ist eine Drosselklappe 12 untergebracht, deren Drehstellung mittels eines Signals DK einstellbar ist. Weiterhin kann das Abgasrohr 7 über eine hier nicht dargestellte Abgasrückführungsleitung (AGR) mit dem Ansaugrohr 6 verbunden sein. Die Steuerung der Abgasrückführung kann beispielsweise über ein von dem Steuergerät 16 ansteuerbares, hier ebenfalls nicht dargestelltes Abgasrückführventil erfolgen.

In einer ersten Betriebsart, dem Homogenbetrieb der Brennkraftmaschine 1, wird die Drosselklappe 12 in Abhängigkeit von der erwünschten, zugeführten Luftmasse teilweise geöffnet bzw. geschlossen. Der Kraftstoff wird von dem Einspritzventil 8 während einer durch den Kolben 2 hervorgerufenen Ansaugphase in den Brennraum 4 eingespritzt. Durch die gleichzeitig angesaugte Luft wird der eingespritzte Kraftstoff verwirbelt und damit im Brennraum 4 im Wesentlichen gleichmäßig/homogen verteilt. Danach wird das Kraftstoffluftgemisch während der Verdichtungsphase verdichtet, um dann von der Zündkerze 9 entzündet zu werden.

Durch die Ausdehnung des entzündeten-Kraftstoffs wird der Kolben 2 angetrieben.

In einer zweiten Betriebsart, dem Schichtbetrieb der Brennkraftmaschine 1, wird die Drosselklappe 12 weit geöffnet (Lambda >> 1). Der Kraftstoff wird von dem Einspritzventil 8 während einer durch den Kolben 2 hervorgerufenen Verdichtungsphase in den Brennraum 4 eingespritzt. Dann wird mit Hilfe der Zündkerze 9 der Kraftstoff entzündet, so dass der Kolben 2 in der nunmehr folgenden Arbeitsphase durch die Ausdehnung des entzündeten Kraftstoffs angetrieben wird.

Die Brennkraftmaschine 1 kann mit Hilfe des Steuergerätes 16 zwischen den verschiedenen Betriebsarten umschalten. In allen Betriebsarten wird durch den angetriebenen Kolben 2 eine Kurbelwelle 14 in eine Drehbewegung versetzt, über die letztendlich die Räder des Kraftfahrzeugs angetrieben werden. Auf der Kurbelwelle 14 ist ein Zahnrad angeordnet, dessen Zähne von einem unmittelbar gegenüber angeordneten Drehzahlsensor 15 abgetastet werden. Der Drehzahlsensor 15 erzeugt ein Signal, aus dem die Drehzahl n der Kurbelwelle 14 ermittelt wird und übermittelt dieses Signal n an das Steuergerät 16. In allen Betriebsarten wird die von dem Einspritzventil 8 in den Brennraum eingespritzte Kraftstoffmasse von dem Steuergerät 16, insbesondere im Hinblick auf einen geringen Kraftstoffverbrauch und/oder eine geringe Schadstoffentwicklung und/oder ein gewünschtes Sollmoment gesteuert und/oder geregelt. Auch die Gemischadaptionsfunktion sowie die erfindungsgemäße Auswertung der Gemischadaptionswerte erfolgt in dem Steuergerät 16. Zu diesem Zweck ist das Steuergerät 16 mit einem Mikroprozessor versehen, der in einem Speichermedium Programmcode abgespeichert hat, der dazu geeignet ist, die gesamte erfindungsgemäße Steuerung und/oder Diagnose der Brennkraftmaschine 1 bzw. des Kraftstoffzumeßsystems durchzuführen.

Das Steuergerät 16 nach Figur 1 ist weiterhin mit einem Fahrpedalsensor 17 verbunden, der ein Signal FP erzeugt, das die Stellung eines von einem Fahrer betätigbaren Fahrpedals/Gaspedals und damit das von dem Fahrer angeforderte Moment angibt. Entsprechend weiterer Betriebsbedingungen und dem vom Fahrer angeforderten Moment wird vom Steuergerät 16 die aktuell auszuführende Betriebsart ausgewählt und entsprechend angesteuert und/oder geregelt.

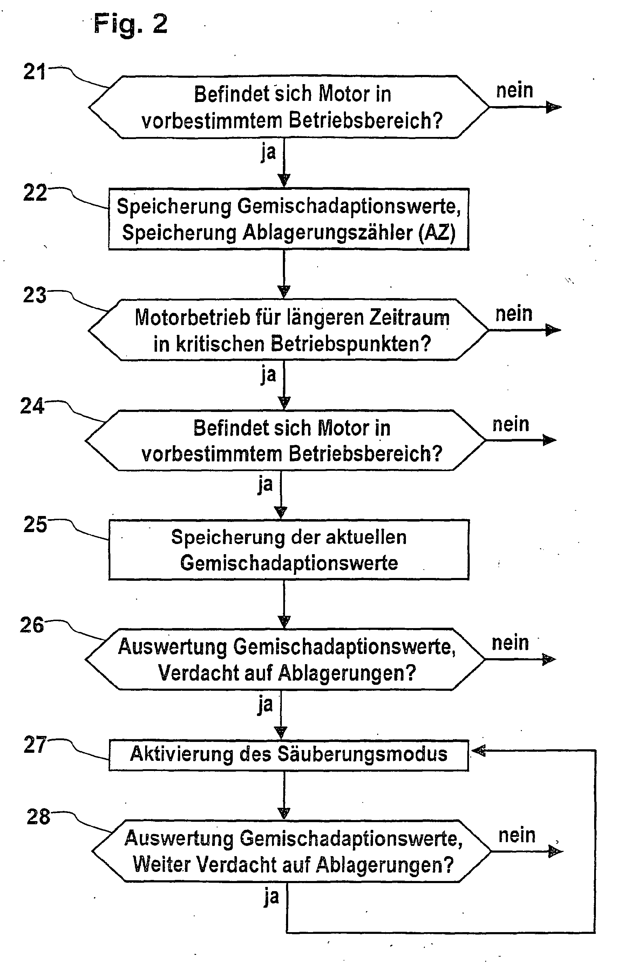

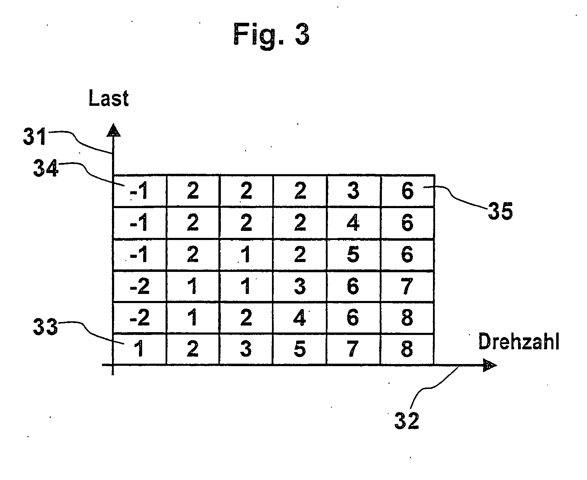

Das in das Steuergerät 16 implementierte erfindungsgemäße Verfahren wird im Rahmen der folgenden Figuren 2 und 3 eingehender erläutert.

Bei Motoren mit Direkteinspritzung wird der Kraftstoff (Benzin oder Diesel) mittels eines Hochdruckeinspritzventils 8 direkt in den Brennraum 4 eingespritzt. Aufgrund des Verbrennungsprozesses kann es dabei zu Ablagerungen bzw. Verkokung an der Ventilspitze 8 kommen (allgemein Verschmutzungen). Diese Verschmutzungen beeinflussen den Ventildurchfluß und verändern die Spraycharakteristik, z.B. die Strahlform. Dies führt unter anderem zu einer Erhöhung der Abgasschadstoffe und im schlimmsten Fall zu Verbrennungsaussetzern.

Voraussetzung für das erfindungsgemäße Verfahren nach Figur 2 ist eine Gemischadaptionsfuntion, die im Steuergerät 16 nach Figur 1 abläuft. Die Gemischadaptionsfunktion erkennt Änderungen in der Gemischzusammensetzung (Verhältnis von Kraftstoff zu Luft). Als Referenz dient dabei das Signal Lambda der Lambdasonde 11 bzw. des Lambdareglers. Verringert sich aufgrund der Verschmutzung eines Einspritzventils 8 die eingespritzte Kraftstoffmasse, so zeigt die Lambdasonde 11 ein zu mageres Gemisch. Um wieder den gewünschten Lambdawert (beispielsweise Lambda=1) zu erreichen, wird angefettet, das heißt die Einspritzzeit wird um einen bestimmten Faktor verlängert. Dieser Faktor ist das Ausgangssignal der Gemischadaptionsfunktion und stellt die Grundlage für das erfindungsgemäße Verfahren in Figur 2 dar, das im Folgende beschrieben wird. Entsprechend dem erfindungsgemäßen Verfahren zur Steuerung und/oder Diagnose eines Kraftstoffzumeßsystems einer Brennkraftmaschine nach Figur 2 werden die Gemischadaptionswerte der Gemischadaptionsfunktion in ähnlichen Betriebsbereichen (Last/Drehzahlbereich) und unter ähnlichen Betriebsbedingungen (Motortemperatur, quasi stationärer Betrieb, ...) verglichen. Führen Verschmutzungen zu einer Durchflußreduktion am Einspritzventil 8, so wird dies über eine Erhöhung des Faktors der Gemischadaption ausgeglichen. Da die Verschmutzungsneigung stark betriebspunktabhängig ist, wird ein Ablagerungszähler verwendet, der die bisher angefahrenen Betriebspunkte integriert. So ist z.B. die Verschmutzung im Schichtbetrieb oder bei hoher Abgasrückführrate höher als bei einem Homogenbetrieb, bei dem die Verschmutzung bzw. Ablagerung an den Einspritventilen sogar zurückgehen können.

Das erfindungsgemäße Verfahren nach Figur 2 beginnt im Schritt 21 mit der Überprüfung, ob sich der Motor in einem vorbestimmten Betriebsbereich befindet. Dies kann beispielsweise ein quasi stationärer Motorbetrieb in einem vorbestimmten Betriebsbereich sein, beispielsweise ein Drehzahlbereich von 2000-2500 Umdrehungen pro Minute und eine Last von 70 bis 100 %. Befindet sich der Motor nicht in diesem vorbestimmten Betriebsbereich, so wird das Verfahren im Schritt 21 abgebrochen. Befindet sich der Motor in den vorbestimmten Betriebsbereich, so wird vom Schritt 21 zum Schritt 22 übergegangen. Im Schritt 22 werden die aktuellen Gemischadaptionswerte sowie der aktuelle Ablagerungszähler AZ gespeichert. Der Ablagerungszähler wird im Rahmen der Figur 3 noch eingehender erläutert. Dem Schritt 22 schließt sich der Schritt 23 an, in dem überprüft wird, ob der Motorbetrieb für einen längeren, vorgebbaren Zeitraum in einem kritischen Betriebspunkt stattgefunden hat. Unter einem kritischen Betriebspunkt für einen längeren Zeitraum ist hierbei eine kritische Betriebsweise bezüglich von Verschmutzungen oder Ablagerungen zu verstehen. Dies wird im Schritt 23 daran festgemacht, dass die Differenz aus aktuellem Ablagerungszähler AZ und dem in Schritt 22 gespeicherten Ablagerungszähler einen bestimmten, vorgebbaren Schwellenwert überschritten hat. Ist dies nicht der Fall, wird das Verfahren im Schritt 23 abgebrochen. Ist dies hingegen der Fall, dass die Differenz aus aktuellem und vorab gespeicherten Ablagerungszähler einen Schwellenwert überschreitet, so wird zum schritt 24 übergegangen. Im Schritt 24 wird analog zum Schritt 21 überprüft, ob sich der Motor in einem vorbestimmten Betriebsbereich befindet. Hierbei wird der gleiche Betriebsbereich erwartet, wie dies bereits im Schritt 21 der Fall war. Im Rahmen dieses Ausführungsbeispiels war dies der quasi-stationäre Motorbetrieb mit beispielsweise einer Drehzahl von 2000 bis 2500 Umdrehungen pro Minute und einer Last von 70 bis 100 %. Ist dieser vorbestimmte Betriebsbereich nicht gegeben, ist das Verfahren nach Schritt 24 beendet, bzw. wird abgebrochen. Ist der vorbestimmte Betriebsbereich gegeben, fährt das Verfahren im Schritt 25 damit fort, die zu diesem . Zeitpunkt aktuellen Gemischadaptionswerte (insbesondere den Faktor der Gemischadaption, wie oben beschieben) zu speichern. An den Schritt 25 schließt sich der Schritt 26 an, in dem die aktuell gespeicherten Gemischadaptionswerte mit den zuvor in Schritt 22 gespeicherten Gemischadaptionswerten verglichen werden. Im einzelnen wird überprüft, ob die Differenz aus jetzt aktuellen und zuvor gespeicherten Gemischadaptionswerten größer als ein vorgebbarer Schwellenwert ist. Ist dies nicht der Fall, ist das Verfahren im Schritt 26 beendet, bzw. wird abgebrochen. Wird im Schritt 26 festgestellt, dass ein Schwellenwert überschritten ist, besteht der Verdacht auf Ablagerungen. In diesem Fall schließt sich an Schritt 26 der Schritt 27 an, in dem ein Säuberungsmodus aktiviert wird. Zur Säuberung sind verschiedene Möglichkeiten denkbar, die zu einer Ablagerungsreduktion führen können: Z.B. Umschalten vom Schichtbetrieb in den Homogenbetrieb, Verstellen des Zündwinkels nach früh zur Erzeugung kurzzeitig klopfender Verbrennung oder beispielsweise eine Doppeleinspritzung (zweimaliges Einspritzen), deren Ziel die Reduktion der Ventilspitzentemperatur ist, was sich wiederum positiv auf die Verkokung bzw. die Verschmutzung auswirkt. An die Aktivierung des Säuberungsmodus nach Schritt 27 schließt sich der Schritt 28 an in dem die nunmehr nach dem Säuberungsmodus vorliegenden aktuellen Gemischadaptionswerte erneut mit denen nach Schritt 22 gespeicherten Gemischadaptionswerten verglichen werden. Für den Fall, dass die Differenz aus jetzt aktuellem und zuvor gespeicherten Gemischadaptionswerten nach wie vor größer als der vorgebbare Schwellenwert nach Schritt 26 ist, und somit weiter Verdacht auf Ablagerungen besteht, wird die Aktivierung des Säuberungsmodus wiederholt und es wird zu Schritt 27 übergegangen. Ist die Überschreitung des Schwellenwertes nach Schritt 28 nicht gegeben, wird von einem gereinigten Kraftstoffversorgungssystem ausgegangen, und das Verfahren ist beendet.

Figur 3 zeigt den zuvor bereits genannten erfindungsgemäßen Ablagerungszähler, wobei auf einer ersten Achse 31 eine Last des Motors und auf einer zweiten Achse 32 eine Drehzahl des Motors dargestellt ist. Über der Motorlast und den Drehzahlbereichen ist ein Wichtungskennfeld abgelegt, das in diesem Ausführungsbeispiel aus diskreten Faktoren besteht. Wird der Motor in einem entsprechenden Betriebsbereich betrieben, erfolgt eine Summation des Kennfeldwertes in einem bestimmten Zeitraster. Beispiele für verschiedene Betriebsbereiche sind die gekennzeichneten Kennfelder des Wichtungskennfeldes 33, 34 und 35. Hierbei entspricht Feld 33 einem Betriebspunkt mit geringer Last und geringer Drehzahl, Feld 34 einem Betriebspunkt mit hoher Last und geringer Drehzahl und Feld 35 einem Betriebspunkt mit hoher Last und hoher Drehzahl. Es kann auch vorgesehen sein, für die verschiedenen Betriebsarten einer direkteinspritzenden Brennkraftmaschine verschiedene Wichtungskennfelder zu verwenden, da die Verschmutzungsneigung z.B. in der homogenen Betriebsweise signifikant geringer ist als in der mageren Schicht-Betriebsweise. Im Extremfall können die Ablagerungen im Homogenbetrieb sogar zurückgehen, was durch negative Summanden im Wichtungskennfeld verdeutlicht ist. Ein weiterer Einflußfaktor ist z.B. die Abgasrückführrate, für die z.B. ein zusätzlicher Summand vorgesehen sein kann. Falls die Gemischadaption sowie die Lambda-Regelung der Brennkraftmaschine zylinderindividuell erfolgt, wird auch das erfindungsgemäße Verfahren vorteilhaft zylinderindividuell durchgeführt.

Der Ablagerungszähler wird dazu genutzt, die Zeitpunkte zu bestimmen zu denen eine Auswertung der Gemischadaptionwerte erfolgt. Die Zeit zwischen zwei Auswertungszeitpunkten ist variabel und wird durch den Zählerstand des Ablagerungszählers bestimmt. Dadurch wird erreicht, dass in der Zeit zwischen zwei Auswertungen die Verschmutzungswahrscheinlichkeit in etwa gleich groß ist. Die Brennkraftmaschine wurde also für eine bestimmte Zeit in einem für Ablagerungen kritischen Betriebsbereich betrieben. Dies verbessert die Auswertung erheblich, da die Gemischadaptionswerte zu den sich auf diese Weise ergebenden Auswertungszeitpunkten vergleichbarer werden.

Bei entsprechender Speicher- und Rechenkapazität im Steuergerät 16 kann das Verfahren noch um die Berücksichtigung zusätzlicher Einflüsse erweitert werden. Beispielsweise hat Leckluft einen ähnlichen Einfluß auf die Gemischadaptionswerte wie ein verschmutztes Einspritzventil. Dies kann von einer Ventilverschmutzung unterschieden werden, indem die Gemischadaptionswerte im Schicht- und im Homogenbetrieb verglichen werden. Liegt ein solcher Leckluftfehler vor, kommt es im Schicht-Betrieb - mit weitestgehend geöffneter Drosselklappe - zu keiner Erhöhung der Gemischadaptionswerte.

Eine weitere Möglichkeit zur Erweiterung des Verfahrens besteht darin, die Gemischadaptionswerte in verschiedenen Lastpunkten zu vergleichen. Diese Erweiterung beruht darauf, dass eine Durchflussreduktion am Einspritzventil durch Verschmutzung nahezu drehzahlunabhängig zu einer Erhöhung der Gemischadaptionswerte bei hoher Last führt.

Es liegt weiterhin im Rahmen der Erfindung, die Verfahren nach den Figuren 2 und 3 in einer Software umzusetzen. Dies bedeutet, dass ein Computerprogramm mit einer Abfolge von Befehlen vorhanden ist, wobei die Befehle letztlich die einzelnen Schritte der Verfahren in gleicher Weise durchführen, wie es in den Figuren 2 und 3 dargestellt ist.

## Patentansprüche

1. Verfahren zur Steuerung und/oder Diagnose eines Kraftstoffzumesssystems einer Brennkraftmaschine, wobei Kraftstoff von wenigstens einem Ventil direkt in wenigstens einen Brennraum eingespritzt wird,
wobei die Brennkraftmaschine eine Gemischadaptionsfunktion aufweist, die Änderungen in der Gemischzusammensetzung erkennt,
wobei zur Erreichung einer gewünschten Gemischzusammensetzung eine Einspritzzeit um einen bestimmten Faktor verlängert wird, **dadurch gekennzeichnet, dass** eine Verschmutzung des Ventils erkannt wird, wenn der bestimmte Faktor einen Schwellenwert überschreitet.

2. Verfahren nach Anspruch 1, **dadurch gekennzeichnet, dass** die Verschmutzung anhand von steigenden Ausgangswerten der Gemischadaptionsfunktion erkannt wird.

3. Verfahren nach Anspruch 1, **dadurch gekennzeichnet, dass** die Auswertung der Ausgangswerte der Gemischadaptionsfunktion jeweils nach einer variablen Zeitdauer erfolgt.

4. Verfahren nach Anspruch 3, **dadurch gekennzeichnet, dass** die variable Zeitdauer von Betriebspunkten abhängig ist, die während eines Betriebs der Brennkraftmaschine durchlaufen werden.

5. Verfahren nach Anspruch 4, **dadurch gekennzeichnet, dass** den jeweiligen Betriebspunkten eine Wichtung zugeordnet ist, die in Abhängigkeit von einer erwarteten Verschmutzungswahrscheinlichkeit erfolgt.

6. Verfahren nach Anspruch 1, **dadurch gekennzeichnet, dass** eine Auswertung nur dann erfolgt, wenn sich die Brennkraftmaschine zum Auswertungszeitpunkt in einem vorgegebenen Betriebsbereich befindet.

7. Verfahren nach Anspruch 1 **dadurch gekennzeichnet, dass** zur Auswertung gespeicherte Ausgangswerte der Gemischadaptionsfunktion mit aktuellen Werten verglichen werden.

8. Verfahren nach Anspruch 1, **dadurch gekennzeichnet, dass** bei Feststellung einer Verschmutzung gezielt, gegebenenfalls auch wiederholt, Maßnahmen zur Reinigung eingeleitet werden.

9. Computerprogramm für eine Brennkraftmaschine eines Kraftfahrzeugs, mit einer Abfolge von Befehlen, die dazu geeignet sind, das Verfahren nach einem der Ansprüche 1 bis 8 durchzuführen, wenn sie auf einem Computer, insbesondere einem Steuergerät für eine Brennkraftmaschine, ausgeführt werden.

10. Computerprogramm nach Anspruch 9, wobei die Abfolge von Befehlen auf einem computerlesbaren Datenträger gespeichert ist.

11. Steuergerät zur Ausführung eines Verfahrens nach mindestens einem der Ansprüche 1 bis 8, wobei Kraftstoff von wenigstens einem Ventil direkt in wenigstens einen Brennraum eingespritzt wird, wobei das Steuergerät eine Gemischadaptionsfunktion aufweist, die Änderungen in der Gemischzusammensetzung erkennt,
wobei zur Erreichung einer gewünschten Gemischzusammensetzung eine Einspritzzeit um einen bestimmten Faktor verlängert wird, **dadurch gekennzeichnet, dass** Mittel vorgesehen sind, die eine Verschmutzung des Ventils erkennen, wenn der bestimmte Faktor einen Schwellenwert überschreitet.

12. Brennkraftmaschine mit einem Steuergerät gemäß Anspruch 11.

## Claims

1. Method for the control and/or diagnosis of a fuel metering system of an internal combustion engine, with fuel being injected by at least one valve directly into at least one combustion chamber, with the internal combustion engine having a mixture adaptation function which detects changes in the mixture composition,
with an injection time being extended by a certain factor in order to obtain a desired mixture composition, **characterized in that** a contamination of the valve is detected if the certain factor exceeds a threshold value.

2. Method according to Claim 1, **characterized in that** the contamination is detected on the basis of rising starting values of the mixture adaptation function.

3. Method according to Claim 1, **characterized in that** the evaluation of the starting values of the mixture adaptation function takes place in each case after a variable time duration.

4. Method according to Claim 3, **characterized in that** the variable time duration is dependent on operating points which are run through during operation of the internal combustion engine.

5. Method according to Claim 4, **characterized in that** a weighting is assigned to the respective operating points, which weighting takes place as a function of an expected contamination probability.

6. Method according to Claim 1, **characterized in that** an evaluation takes place only if the internal combustion engine is in a predefined operating range at the evaluation time.

7. Method according to Claim 1, **characterized in that**, for the evaluation, stored starting values of the mixture adaptation function are compared with present values.

8. Method according to Claim 1, **characterized in that**, in the event of a contamination being detected, measures for cleaning are initiated in a targeted and if appropriate also repeated fashion.

9. Computer program for an internal combustion engine of a motor vehicle, having a sequence of commands which are suitable for carrying out the method according to one of Claims 1 to 8 if they are executed on a computer, in particular on a control unit for an internal combustion engine.

10. Computer program according to Claim 9, with the sequence of commands being stored on a computer-readable data carrier.

11. Control unit for carrying out a method according to at least one of Claims 1 to 8, with fuel being injected by at least one valve directly into at least one combustion chamber, with the control unit having a mixture adaptation function which detects changes in the mixture composition, with an injection time being extended by a certain factor in order to obtain a desired mixture composition, **characterized in that** means are provided which detect a contamination of the valve if the certain factor exceeds a threshold value.

12. Internal combustion engine having a control unit according to Claim 11.

## Revendications

1. Procédé de commande et/ou de diagnostic d'un système de dosage de carburant dans un moteur à combustion interne selon lequel le carburant est injecté par au moins un injecteur, directement dans au moins une chambre de combustion,
le moteur à combustion interne a une fonction d'adaptation de mélange qui reconnaît les variations de composition du mélange,
et pour obtenir la composition souhaitée du mélange, on prolonge la durée d'injection d'un certain coefficient,
**caractérisé en ce qu'**
on détecte l'encrassage de l'injecteur par le coefficient déterminé qui dépasse un seuil.

2. Procédé selon la revendication 1,
**caractérisé en ce que**
l'encrassage se détecte par des valeurs de sortie croissantes de la fonction d'adaptation de mélange.

3. Procédé selon la revendication 1,
**caractérisé en ce que**
l'exploitation des valeurs de sortie de la fonction d'adaptation de mélange se fait chaque fois après une durée variable.

4. Procédé selon la revendication 3,
**caractérisé en ce que**
la durée variable dépend des points de fonctionnement parcourus par le moteur à combustion interne au cours du fonctionnement.

5. Procédé selon la revendication 4,
**caractérisé en ce qu'**
on associe une pondération aux points de fonctionnement respectifs qui se fait en fonction d'une probabilité prévisible d'encrassage.

6. Procédé selon la revendication 1,
**caractérisé en ce que**
l'exploitation ne se fait que si à l'instant de l'exploitation le moteur à combustion interne se trouve dans une plage de fonctionnement prédéfinie.

7. Procédé selon la revendication 1,
**caractérisé en ce que**
pour l'exploitation on compare des valeurs de sortie mémorisées fournies par la fonction d'adaptation de mélange à des valeurs actuelles.

8. Procédé selon la revendication 1,
**caractérisé en ce que**
lorsqu'on constate un encrassage, on lance des mesures de nettoyage de manière ciblée, le cas échéant de façon répétée.

9. Programme d'ordinateur d'un moteur à combustion interne de véhicule automobile par une succession d'ordres permettant d'exécuter le procédé selon l'une des revendications 1 à 8 lorsque le procédé est exécuté par un ordinateur, notamment un appareil de commande d'un moteur à combustion interne.

10. Programme d'ordinateur selon la revendication 9,
selon lequel
la succession des ordres est mémorisée sur un support de données que peut lire un ordinateur.

11. Appareil de commande pour exécuter le procédé selon au moins l'une des revendications 1 à 8, le carburant étant injecté par au moins un injecteur directement dans au moins une chambre de combustion,
l'appareil de commande présente une fonction d'adaptation de mélange, qui reconnaît les variations de la composition du mélange,
et pour atteindre une composition de mélange souhaitée, on prolonge une durée d'injection d'un facteur déterminé,
**caractérisé par**
des moyens qui reconnaissent l'encrassage de l'injecteur par le coefficient déterminé qui dépasse un seuil.

12. Moteur à combustion interne équipé d'un appareil de commande selon la revendication 11.
